# EUROPEAN PATENT APPLICATION

(11) **EP 4 574 718 A1**
(43) Date of publication of application: **25.06.2025**
(21) Application number: 24222734.6
(22) Date of filing: 23.12.2024
(51) Int. Cl.: B65G 43/08, B65G 61/00, G06Q 10/04

(54) **METHOD AND SYSTEM FOR STACKING BOXES ON A PALLET**

(30) Priority: 22.12.2023 BE 202306052
(71) Applicant: Vento NV, 9700 Oudenaarde (BE)
(72) Inventor: MODDE, Bart, 9700 Oudenaarde (BE)
(74) Representative: Brantsandpatents bv

(57) **Abstract**

The present invention relates to a computer-implemented method for stacking boxes on a pallet, wherein the method includes: automatically selecting a combination of boxes from a predefined set of boxes with different predetermined volumes based on specifications of a received order, providing ordered items from the received order in the boxes of the selected combination of boxes, arranging the boxes, selecting a stacking pattern from a database for stacking the selected combination of boxes on the pallet, stacking the selected combination of boxes according to the selected stacking pattern on the pallet using the picking robot. The invention also relates to a computer-implemented system for stacking boxes on a pallet, comprising: a processing unit, means for arranging the boxes, a database, a module, and a picking robot.

## Description

### TECHNICAL FIELD

The invention relates to a method and system for stacking boxes on a pallet.

In another aspect, the invention also relates to a use for stacking boxes on a pallet.

### PRIOR ART

Correct stacking of boxes on a pallet is crucial for optimizing logistics processes and minimizing operational challenges. Boxes are often stacked manually on a pallet. This manual approach does offer operational flexibility, but it faces drawbacks such as labor intensity, time consumption, and variability in stack stability. On the other hand, known automated systems, such as palletizing machines, offer advantages in terms of speed and consistency. Nevertheless, they face various disadvantages. One of the significant obstacles is the substantial initial costs. An additional challenge these systems face is handling variable box sizes. The diversity in box dimensions will lead to complex configurations and adjustments, affecting operational efficiency. Moreover, it will lead to suboptimal placement of boxes on the pallet, which in turn affects the stability of the stack. Another important consideration is the risk of potential damage to goods during the automated stacking process. The lack of flexibility in handling delicate boxes or products will result in unintended damage.

The present invention aims to at least find a solution to some of the above-mentioned problems or disadvantages. The objective of the invention is to provide a method that eliminates these disadvantages.

### SUMMARY OF THE INVENTION

In a first aspect, the present invention relates to a method according to claim 1. Prefer embodiments of the method are shown in claims 2 to 9.

The method for stacking boxes on pallets is characterized by an automated approach that maximizes efficiency. The combination of a picking robot with a vacuum system, the use of predefined stacking patterns, and communication with a warehouse management system results in a process that is not only fast and accurate but also flexible and adaptable with respect to the incoming order.

A goal of the method is to improve the efficiency of the stacking process by automated selection of boxes based on specifications of a received order and the use of predefined stacking patterns.

A goal of the method is to limit the use of unnecessary or excessively large boxes by accurately selecting and stacking boxes with volumes that match the received order.

A goal of the method is to optimize the available space on pallets by selecting suitable stacking patterns from a database, thereby efficiently filling the pallets.

A goal of the method is to minimize the risk of damage to ordered items and increase the speed, accuracy, and safety of the stacking process by, among other things, using a picking robot with a vacuum system.

A goal of the method is to facilitate traceability and identification of products during storage and transport by labeling the boxes.

A goal of the method is to optimize inventory management by communicating with a warehouse management system to update order and inventory data.

A goal of this method is to create a flexible stacking process that can be adapted to specific needs and conditions, such as different pallet heights and types of products.

In a second aspect, the present invention relates to a system according to claim 10. Preferred embodiments of the system are described in the dependent claims 11 to 14.

Through the automated selection process of stacking patterns, the system optimizes the available pallet space, leading to more efficient use of storage space and a reduction in the required storage space. The flexibility in box volumes, with different proportions between types of boxes, makes the system suitable for a wide range of product sizes, promoting adaptability and efficiency. The integration of a picking robot with a vacuum system minimizes human effort in stacking, resulting in a more streamlined and accurate logistics process. This innovation contributes to faster order processing and minimizes errors, while the system simultaneously offers a wide range of box types to meet diverse needs and conditions.

A goal of the system is to increase flexibility by using different box volumes with specific proportions, allowing it to efficiently handle diverse product sizes and order requirements.

A goal of the system is to efficiently select stacking patterns from a database of predefined patterns, based on historical data and specific customer requirements.

A goal of the system is to optimize stacking patterns based on the specifications of received orders, resulting in efficient use of the available space on a pallet.

A goal of the system is to automatically analyze orders and select suitable stacking patterns based on the dimensions of the ordered products and the available space on the pallet, resulting in reduced delivery time.

A goal of the system is to automate the stacking process with a picking robot that accurately and quickly moves boxes of different sizes, leading to a streamlined and efficient logistics process.

A goal of the system is to improve accuracy by using labels with identification codes, reducing errors in picking items and speeding up the order identification process.

A goal of the system is to offer at least two different types of boxes with various volume proportions, allowing the system to be adapted to specific needs and conditions for efficient use of storage space and transport.

In a third aspect, the present invention relates to a use according to claim 15.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

The term "ordered items" in the present invention refers to the products stored in the boxes and ordered by a customer. These products can vary in size, type, and quantity, depending on the specific order of the customer. In this context, the items are fittings, ventilation bends, or similar articles.

The term "predefined set of boxes" in the present invention refers to a specific set of boxes, defined based on their dimensions and volumes, which can be stacked in various combinations and patterns on a pallet.

The term "stacking pattern" in the present invention refers to the specific arrangement and positioning of boxes on a pallet. Each stacking pattern is digitally composed and stored in a database.

The term "subsequent box" in the present invention refers to the box that directly follows another box in the set of boxes. It simply means the second box in relation to the first box and the third box in relation to the second box.

In a first aspect, the invention relates to a computer-implemented method for stacking boxes on a pallet. The proposed computer-implemented method for stacking boxes has several advantages. It reduces the risk of damage to goods during transport, improves the stability of the pallet, and limits the use of unnecessary or excessive packaging.

According to a preferred embodiment, the method comprises the automated selection of a combination of boxes from a predefined set of boxes with different predetermined volumes based on specifications of a received order. The selected combination of boxes has a total volume that is not greater than the volume of the largest box in the set. In this context, the largest box from the predefined set of boxes is defined as a box with a volume of up to 800 cm². However, in other embodiments, the largest box may have a volume smaller or larger than 800 cm², for example, 750 cm² or 850 cm², depending on the specific needs and constraints of the warehouse or transport infrastructure.

It is important to note that the specific dimensions of the boxes and pallets may vary depending on the specific requirements of the order and the available storage space. However, in a preferred embodiment, the boxes have a volume of up to 800 cm³, which corresponds to the maximum dimensions of a largest box from the predefined set of boxes. This ensures that the boxes can be efficiently stacked on the pallets without wasting space.

According to a preferred embodiment, the method further comprises providing ordered items from the received order in the boxes of the selected combination of boxes.

According to a preferred embodiment, the method further comprises arranging the boxes, whereby they are guided to a picking robot in order of largest to smallest volume. The order significantly simplifies the offering of boxes to the picking robot, resulting in a reduction of the complexity in gripping and placing boxes. This order facilitates the task of the picking robot, allowing it to handle boxes of various sizes more effectively. Guiding the boxes to the picking robot in an ascending order from large to small also results in stacking on the pallet in the same order, contributing to more efficient use of the available space on the pallet. An additional advantage of arranging boxes from large to small is minimizing interference between different boxes. Moreover, stacking boxes in order from large to small reduces the risk of damage to the contents, as larger boxes are not placed on smaller boxes. This is especially important during the transport and storage of the products, where the boxes may be subject to movements and vibrations. Finally, this approach contributes to smooth movement of the picking robot and reduces the risk of collisions between boxes during stacking.

According to a preferred embodiment, the method further comprises selecting a stacking pattern from a database for stacking the selected combination of boxes on the pallet. The database includes a plurality of predefined stacking patterns, whereby at least one predefined stacking pattern is provided for and associated with each combination of boxes with a total volume that is not greater than the volume of the largest box in the set of boxes. The stacking patterns are composed based on the volume and number of boxes to be combined. The stacking pattern associated with the selected combination is selected. The effectiveness of the described method lies in the use of a database with predefined stacking patterns for optimizing the stacking process. What makes this method further unique is the automated choice of the stacking pattern associated with the selected combination of boxes. This offers a level of customization and flexibility that goes beyond conventional methods. The database contains predefined stacking patterns for every possible combination of boxes with a total volume that is not greater than the largest box in the set. This makes the method suitable for various orders with different combinations of box sizes, increasing flexibility and adaptability. The use of stacking patterns specifically composed based on the volume and number of boxes contributes to optimal utilization of the available space on the pallet. Moreover, the method emphasizes not only the optimization of space but also the increase of the stability of the stacked boxes. By selecting specific stacking patterns based on the unique combination, the method contributes to safer stacking, which is beneficial for both transport and storage.

According to a preferred embodiment, the method further comprises stacking the selected combination of boxes according to the selected stacking pattern on the pallet using the picking robot. The stacking process includes detecting edges of an upper surface of a box to be picked from the selected combination of boxes using a photoelectric sensor that moves along the edges of the upper surface of the box to be picked. Lifting the box based on the detected edges and placing the box on the pallet according to the selected stacking pattern. These steps are repeated until the selected pattern is built on the pallet. This process is carried out in an automated manner, which increases the speed and accuracy of the process and significantly reduces the risk of injury from heavy lifting. The superiority of a photoelectric sensor over other sensors in the automated stacking process with a picking robot arises from several considerations. First, the photoelectric sensor offers exceptional precision in detecting the edges of boxes, which is crucial for an error-free gripping and placing movement. The accuracy of the sensor ensures consistent and reliable positioning of the boxes on the pallet. Additionally, the flexibility of photoelectric sensors is distinguished by their ability to adapt to different conditions and materials. This makes them suitable for various types of boxes and variable stacking situations, making them a versatile choice compared to some other sensors with more limited application possibilities. The fast response time of photoelectric sensors contributes to the overall efficiency of the detection process, allowing the picking robot to quickly and adequately respond to changes in the environment. This not only speeds up the automated stacking process but also increases productivity. Another advantage is the reliability of photoelectric sensors in automated systems. Due to the robust and stable performance of these sensors, the likelihood of malfunctions is reduced, leading to consistent and trouble-free operation of the system.

Alternatively, other sensors can also be used to detect the edges of a box. For example, 2D cameras can be used to capture a two-dimensional image of the upper surface of the boxes. Image processing algorithms can then be applied to detect the edges of the boxes. 3D cameras can capture depth information in addition to the two-dimensional image. This allows the picking robot not only to detect the edges but also to estimate the height differences and three-dimensional shape of the boxes. Furthermore, laser triangulation sensors can measure the distance to objects by directing a laser beam onto the surface and analyzing the reflected beam. They can be used to determine the contours of the boxes. Ultrasonic sensors, on the other hand, emit ultrasonic waves and measure the time it takes for the waves to be reflected back. By calculating the position of objects, ultrasonic sensors can help detect edges. Furthermore, tactile sensors can be used to physically detect contact with the edges of the boxes when the robot picks them up. This can be an additional method alongside visual detection. Finally, optical laser sensors use laser beams to measure the position of objects. They can provide accurate measurements and are suitable for applications where precision is important. When choosing a sensor, it is important to consider the specific requirements, including the nature of the boxes, the speed of the process, and the required accuracy.

According to an embodiment, the lifting and moving of the mentioned boxes is carried out using the picking robot, wherein the picking robot is equipped with a vacuum system. The use of a picking robot with a vacuum system offers several advantages. The first advantage is that the boxes are less likely to be damaged. This is because the vacuum system lifts the boxes without physical contact, significantly reducing the chance of damage. Moreover, this will also lead to higher customer satisfaction, as customers receive their products in undamaged packaging. Another advantage of using a picking robot with a vacuum system is that each box can be placed precisely in the correct position in the chosen stacking pattern on the pallet. This means that pallets can be stacked in a very efficient manner, increasing productivity. Also, using the picking robot to move boxes reduces the risk of injury from heavy lifting for employees. This results in improved workplace safety. By being able to combine boxes of different sizes and types on one pallet, the system can respond to specific order needs. Moreover, the picking robot can operate continuously, meaning that pallet stacking can proceed without interruption. This further increases the efficiency of the process. Finally, this method leads to faster deliveries to customers, as the time needed for manually sorting and stacking the boxes is eliminated.

According to a further or alternative embodiment, the predefined set of boxes includes at least two different types of boxes. A ratio between a volume of a first box and the volume of the subsequent second box from the predefined set is at least 1.5:1 and at most 2.5:1. This means that the volume of the first box is at least 1.5 times and at most 2.5 times larger than the volume of the second box. This specific ratio makes it possible to combine boxes of different types and sizes on one pallet without exceeding the maximum permitted volume. This ensures that the space on the pallet is optimally utilized.

In a further or alternative embodiment, the ratio between the volume of the first box and the volume of the second box may vary between 1.6:1 and 2.4:1, or between 1.7:1 and 2.3:1, or even between 1.8:1 and 2.2:1. These variations offer the possibility to adapt the method to specific needs and circumstances, such as the available space on the pallet, the size and type of the products, and the customer's requirements.

According to a further or alternative embodiment, the method further comprises a step of communicating with a warehouse management system for updating order data and inventory data of the predefined set of boxes. This step ensures that the order and inventory data of the boxes are always up-to-date, resulting in accurate and efficient inventory management. The warehouse management system may, for example, contain a database with information about the different types of boxes, the dimensions, the number that can be stacked on a pallet, and the current stock of each box. When an order is placed, the system can update the order data and reduce the stock of the relevant boxes. The system can also automatically place new orders for boxes that are nearly out of stock, to ensure a continuous supply of boxes. Furthermore, communication with the warehouse management system can take place via a wireless connection, such as Wi-Fi or Bluetooth. This allows for remote monitoring of the picking robot and receiving real-time updates on the status of orders and inventory.

According to a further or alternative embodiment, the warehouse management system will also communicate with other systems or devices in the warehouse, such as conveyor belts, sorting machines, or other robots. This enables a fully integrated and automated operation of the warehouse, wherein all processes are seamlessly aligned.

According to a further or alternative embodiment, the warehouse management system is equipped with various safety features, such as automatically stopping the robot in case of an error or malfunction, or sending alerts to staff in case of problems. This contributes to a safe and reliable operation of the warehouse. The warehouse management system can further be equipped with various analytical tools, which allow monitoring and optimizing the performance of the warehouse. This may include tracking the speed at which the robot assembles the pallets, the frequency of errors or malfunctions, the average time needed to process an order, and so on. Based on this data, improvements can be identified and implemented to further increase the efficiency and productivity of the warehouse.

According to a further or alternative embodiment, the method includes labeling the boxes. Here, a label is applied to at least two sides, preferably at least three sides, more preferably at least four sides of each box. For optimal readability, the labels are applied to the sides of each box. This positioning ensures that regardless of how the boxes are stacked, there is always a readable label present. Labeling increases the traceability and identification of the boxes during storage and transport. This is essential to maintain the accuracy of the inventory and to ensure that the correct products are sent to the correct locations. It also helps prevent errors, such as accidentally sending the wrong product or sending a product to the wrong location. Moreover, labeling the boxes on at least two sides provides extra assurance and redundancy. If a label on one side of the box becomes damaged or unreadable, the label on the other side can still be read. This is especially useful in environments where the boxes are exposed to rough handling or adverse conditions that may damage the labels.

According to a further embodiment, the label includes an identification code. This identification code contains information related to an ordered item, for example, information about the size of the box, the type of product stored in the box, the destination of the box, and other relevant information. Preferably, an identification code includes a barcode, QR code, or another form of machine-readable code that can be scanned to quickly obtain information about the contents of the box. Moreover, the labels on the boxes may also contain color codes or other visual indicators to make it easier to identify and sort the boxes. The use of such a label with an identification code not only facilitates the collection of the boxes but also improves the accuracy of the delivery of the ordered items to the customer. By using an identification code, the system can track the exact location of each box in the warehouse. This reduces the chance of errors and ensures that the customer receives exactly what was ordered.

According to a further or alternative embodiment, the boxes are stacked to a maximum height of 100 cm, preferably up to 80 cm. This height restriction contributes to creating a stable and safe stacking structure. It is crucial to ensure the stability of the stacked boxes, especially during transport, to prevent the boxes from toppling over and damaging the products. Moreover, stacking boxes to a certain height can reduce the risk of workplace accidents, as a stack of boxes that is too high can topple over and cause injury.

In a further embodiment, the maximum stacking height will vary between 70 cm and 100 cm, with a preference for 80 cm. This variation in stacking height offers flexibility in the stacking process and allows the height of the stack to be adjusted to the specific needs of transport or storage. For example, for transport in a vehicle with a low ceiling height, it may be necessary to stack the boxes to a maximum height of 70 cm. On the other hand, for storage in a warehouse with high ceilings, the boxes can be stacked to a maximum height of 100 cm. It is also possible to further reduce the height of the stack to 60 cm or even 50 cm, depending on the specific circumstances. These lower stacking heights may be useful, for example, for the transport of fragile products that require extra protection against falls. However, it is important to note that reducing the stacking height may lead to an increase in the number of pallets needed and thus to higher transport costs.

According to a further or alternative embodiment, the method further comprises storing a filled pallet in an automated warehouse, whereby based on the selected stacking pattern, it is determined whether two or more filled pallets can be stacked on top of each other in the automated warehouse. This can be achieved, for example, by looking at the height of the stacked pallets and determining whether there is enough space in the warehouse to store the stacked pallets. This method optimizes storage space by stacking two or more filled pallets based on the selected stacking pattern in an automated warehouse. This leads to more efficient use of the available space, allowing more products to be stored in the warehouse. This can lead to significant space savings, as the need for additional storage space can be reduced or even eliminated. It is important to note that the specific dimensions and number of stacked pallets may vary depending on the selected stacking pattern and warehouse constraints. For example, in some cases, only two pallets can be stacked on top of each other, while in other cases, there may be three or more pallets stacked on top of each other.

In a second aspect, the invention relates to a system for stacking boxes on a pallet.

Preferably, the system includes a processing unit that automatically selects a combination of boxes from a predefined set of boxes with different volumes based on the specifications of a received order. The selected combination has a total volume that is not greater than the volume of the largest box in the set.

Preferably, the system includes means for arranging the boxes in order of largest to smallest volume. This is an essential part of the system, as it ensures that the largest boxes are placed first, improving the stability of the stack.

Preferably, the system includes a database with predefined stacking patterns. At least one pattern is associated with each combination of boxes with a total volume that is not greater than the volume of the largest box. This database is an important part of the system and enables the system to select efficient patterns for stacking boxes. This allows for more boxes to be placed on a pallet, reduces the necessary storage space, and makes transport more efficient. Preferably, the database with predefined stacking patterns can be expanded with additional patterns. These additional patterns can, for example, be generated based on historical order data or designed to meet specific customer requirements. This will further enhance the versatility and adaptability of the system. The system offers a significant degree of flexibility by supporting more than 800 different stacking patterns. These patterns are based on the dimensions of the boxes and the available space on the pallet. The system can handle boxes of different sizes. Each type of box has specific dimensions, and the system is capable of recognizing and using these different dimensions when determining the most suitable stacking pattern.

Preferably, the system includes a module for selecting a stacking pattern from the database based on the selected combination. The chosen stacking pattern is associated with the selected combination. The system is able to analyze the orders and select the most suitable stacking pattern based on that. The system takes into account the dimensions of the ordered products and the available space on the pallet. In this way, the system can process orders more efficiently and shorten delivery times.

Preferably, the system includes a picking robot. The system uses a picking robot that lifts and moves boxes of different sizes without damaging them. The picking robot is equipped with a vacuum system for this purpose. The robot determines the location of the box to be picked by moving a photoelectric sensor over the edges of the top surface of the box. The robot will then pick up the box using the vacuum system and place it in the correct position on the pallet. This process is repeated until the pallet is fully built up according to the stacking pattern. This robot is an important part of the system and reduces the need for human effort in stacking boxes.

This results in a high degree of handling efficiency, where the robot is able to quickly and accurately move and position the various boxes within the package. This results in a more streamlined, accurate, and efficient logistics process, minimizing the chance of damage to the products and packaging.

According to a further or alternative embodiment, the system includes at least two different types of boxes that can be stacked on a pallet in a modular way. These types of boxes differ in dimensions, resulting in different volumes. The ratio between the volume of a first box and a subsequent second box is at least 1.5:1 and at most 2.5:1. This means that the second box is at least 1.5 times smaller and at most 2.5 times smaller than the first box. In particular, the ratio between the volume of a first box and a subsequent second box is 2:1. The use of different types of boxes with varying volumes provides the flexibility to efficiently package ordered items of different sizes while simultaneously optimizing storage on a single pallet. By stacking the boxes in a modular way, the available space on the pallet can be optimally used. This results in minimizing empty spaces between the boxes. It is also important to note that the ratio between the volume of the first box and the subsequent second box can vary. In some embodiments, this ratio may be 2.25:1, while in other embodiments, this ratio may be 1.75:1. This offers the possibility to adapt the system to specific needs and circumstances.

According to a further or alternative embodiment, the predefined set of boxes includes at least three different types of boxes. The ratio between a volume of a first box and a volume of a subsequent second box is at least 1.5:1 and at most 2.5:1, and in particular 2:1. The ratio between the volume of the second box and a volume of a subsequent third box is at least 1.5:1 and at most 2.5:1, and in particular 2:1.

According to a further or alternative embodiment, the system includes at least six different types of boxes, where a ratio between a volume of a first box and a volume of a sixth box is at least 20:1 and at most 28:1, and in particular 24:1. This provides a wide variety of sizes, ensuring that a suitable box is available for each ordered product. It offers a wide range of possibilities for combining boxes when stacking on a pallet, allowing for more efficient use of the available space. Additionally, it ensures increased stability when stacking boxes on a pallet by maintaining a standardized height limit and utilizing the full width of the pallet. A filled pallet is therefore more stable and safer, which is essential for the protection of the goods stored in the boxes.

According to a further or alternative embodiment, the boxes are provided with at least two labels that can be read by the system. These labels are equipped with an identification code that includes information about an ordered item. The identification code can contain information such as the type of item, the number of items in the box, the destination of the box, etc. By having this information directly on the box, the system can quickly and accurately gather the necessary information without requiring extra time for manual checking or verification. Furthermore, it improves the accuracy of picking items. Errors in picking items can lead to delays and additional costs. By using the labels, the system can identify and pick the correct boxes, significantly reducing the chance of errors. Thirdly, it improves order identification. The identification code on the labels can be read by the system, allowing the system to use the information on the labels to identify the orders. This results in faster picking times and fewer errors in sending the orders.

In a further embodiment, the method and system can also be used for stacking other types of objects, such as containers or crates. This can be useful in various industries, such as logistics or the manufacturing industry. In another embodiment, the method and system can be adapted to work with different types of robots, such as robots with more advanced sensor technology or robots capable of carrying heavier loads. This would make the system even more flexible and versatile, enabling it to meet even more different needs.

A person of ordinary skill in the art will appreciate that the method according to a first aspect of the invention can be carried out using a system according to the second aspect for stacking boxes on a pallet. Furthermore, each feature described above as well as below, may relate to any of the three aspects, even if the feature is described in conjunction with a specific aspect of the present invention.

In a third aspect, the invention relates to a use for stacking boxes on a pallet. The use of the system enables the user to stack boxes of different sizes in a strategic manner on a pallet. This results in optimal use of the available pallet and storage space. The method and system offer a high degree of flexibility by supporting more than 800 different stacking patterns. This means that the system is capable of efficiently handling ordered products of different sizes, which helps to shorten processing and delivery times.

In what follows, the invention is described by means of non-limiting examples illustrating the invention, which are not intended or should not be interpreted as limiting the scope of the invention.

### EXAMPLES

### EXAMPLE 1

Example 1: Stacking P12 and P24 boxes.
- The predefined set of boxes includes:
- a P1 box: dimensions (L x W x H): 120 x 80 x 80 cm, and volume: 768 cm³;
- a P2 box: dimensions 60 x 60 x 60 cm, and volume: 384 cm³;
- a P4 box: dimensions 60 x 60 x 60 cm, and volume: 192 cm³;
- a P6 box: dimensions 40 x 40 x 40 cm, and volume: 128 cm³;
- a P12 box: dimensions 40 x 40 x 40 cm, and volume: 64 cm³; and
- a P24 box: dimensions 40 x 40 x 20 cm, and volume: 32 cm³.

A received order contains nine ventilation bends of a first type and five ventilation bends of a second type. The system automatically selects nine P12 boxes and five P24 boxes from a predefined set, based on the specifications of the received order. The ventilation bends are then placed in the selected box and guided from large to small to a picking robot. This means that the picking robot first receives the nine P12 boxes and then the five P24 boxes.

A stacking pattern is selected from the database for stacking the nine P12 boxes and the five P24 boxes on the pallet. The chosen stacking pattern is pre-provided for and associated with the combination of the nine P12 boxes and the five P24 boxes.

A picking robot will stack the nine P12 boxes and the five P24 boxes on the pallet according to the selected stacking pattern. To do this, the picking robot will detect the edges of an upper surface of a box to be picked, lift this box using a vacuum system, and place the said box on the pallet according to the selected stacking pattern. The picking robot will continue to repeat this action until the selected stacking pattern is built on the pallet.

On this stacked pallet, there is a combination of nine P12 boxes, five P24 boxes, and an empty space. By adding up the volumes of these P12 and P24 boxes, including the empty space, a total volume of 768 cm³ is obtained. It should be noted that it is not required for a pallet to be completely filled with boxes; the filling level can vary depending on the size of the assembled order.

The improved efficiency and precision of this method significantly contribute to the optimization of pallet space and minimize errors during the stacking process. The inventors have found that this stacked combination is exceptionally stable, with minimal space loss.

It is clear that the present invention is not limited to the embodiments described in the examples. On the contrary, methods according to the present invention can be realized in many different ways without departing from the scope of the invention.

## Claims

1. A computer-implemented method for stacking boxes on a pallet, the method comprising:
a. automatically selecting a combination of boxes from a predefined set of boxes with different predetermined volumes based on specifications of a received order, wherein the selected combination of boxes has a total volume that is not greater than a volume of a largest box in the set, wherein the largest box from the predefined set of boxes has a volume of up to 800 cm³,
b. providing ordered items from the received order in the boxes of the selected combination of boxes,
c. arranging the boxes, whereby they are guided to a picking robot in order of largest to smallest volume;
d. selecting a stacking pattern from a database for stacking the selected combination of boxes on the pallet, the database comprising a plurality of predefined stacking patterns, wherein at least one predefined stacking pattern is provided for and associated with each combination of boxes with a total volume that is not greater than the volume of the largest box from the set of boxes, wherein the stacking patterns are composed based on the volume and number of boxes to be combined, and wherein the stacking pattern associated with the selected combination is selected;
e. stacking the selected combination of boxes according to the selected stacking pattern on the pallet using the picking robot, the stacking comprising:
i. detecting edges of an upper surface of a box to be picked from the selected combination of boxes using a photoelectric sensor that moves along the edges of the upper surface of the box to be picked;
ii. lifting said box based on the detected edges; and
iii. placing said box on the pallet according to the selected stacking pattern; and
iv. repeating steps i to iii until the selected pattern is built on the pallet.

2. The method according to claim 1, wherein the lifting and moving of the said boxes is carried out using the picking robot, wherein the picking robot is equipped with a vacuum system.

3. The method according to claim 1 or 2, wherein the predefined set of boxes includes at least two different types of boxes, wherein a ratio between a volume of a first box and the volume of the subsequent second box from the predefined set is at least 1.5:1 and at most 2.5:1.

4. The method according to any of the preceding claims 1 to 3, wherein the method further comprises a step of communicating with a warehouse management system for updating order data and inventory data of the predefined set of boxes.

5. The method according to any of the preceding claims 1 to 4, wherein the method includes labeling the boxes, wherein a label is applied to at least two sides of each box.

6. The method according to claim 5, wherein the label includes an identification code, which identification code includes information related to an ordered item.

7. The method according to any of the preceding claims 1 to 6, wherein the boxes are stacked to a height of up to 100 cm, preferably up to 80 cm.

8. The method according to any of the preceding claims 1 to 7, wherein the specifications of the received order include quantities and types of the ordered items, and wherein the automated selection of the combination of boxes takes place based on these specifications.

9. The method according to any of the preceding claims 1 to 8, wherein the method further comprises storing a filled pallet in an automated warehouse, whereby based on the selected stacking pattern, it is determined whether two or more filled pallets can be stacked on top of each other in the automated warehouse.

10. A system for stacking boxes on a pallet, comprising:
a. a processing unit for automatically selecting a combination of boxes from a predefined set of boxes with different volumes based on specifications of a received order, wherein the selected combination has a total volume that is not greater than the volume of the largest box in the set;
b. means for arranging the boxes in order of largest to smallest volume;
c. a database with predefined stacking patterns, wherein at least one pattern is associated with each combination of boxes with a total volume that is not greater than the volume of the largest box;
d. a module for selecting a stacking pattern from the database based on the selected combination, wherein the chosen stacking pattern is associated with the selected combination; and
e. a picking robot for stacking the selected combination of boxes on the pallet according to the chosen stacking pattern, wherein the robot is equipped with a photoelectric sensor for detecting edges of the upper surface of a box to be picked.

11. The system according to claim 10, wherein the predefined set of boxes includes at least two different types of boxes, wherein a ratio between a volume of a first box and a volume of a subsequent second box is at least 1.5:1 and at most 2.5:1.

12. The system according to claim 10, wherein the predefined set of boxes includes at least three different types of boxes, wherein a ratio between a volume of a first box and a volume of a subsequent second box is at least 1.5:1 and at most 2.5:1, wherein a ratio between the volume of the second box and a volume of a subsequent third box is at least 1.5:1 and at most 2.5:1.

13. The system according to claim 10, wherein the predefined set of boxes includes at least six different types of boxes, wherein a ratio between a volume of a first box and a volume of a sixth box is at least 20:1 and at most 28:1.

14. The system according to any of the preceding claims 10 to 13, wherein the boxes are provided with at least two labels suitable for being read by the system, wherein the labels are provided with an identification code that includes information about an ordered item.

15. Use of the method according to any of claims 1 to 9 or the system according to any of claims 10 to 14 for stacking boxes on a pallet.
